# FASCICULE DE BREVET EUROPEEN

(11) **EP 0 597 757 B1**
(45) Date de publication et mention de la délivrance du brevet: **12.04.2000**
(21) Numéro de dépôt: 93402701.2
(22) Date de dépôt: 04.11.1993
(51) Int. Cl.: H01Q 1/12

(54) **Antenne de vitrage pour véhicule automobile**
Antenne auf der Kraftfahrzeugscheibe
Motor vehicle window antenna

(30) Priorité: 10.11.1992 DE 4237818
(43) Date de publication de la demande: 18.05.1994
(73) Titulaire: SAINT-GOBAIN VITRAGE, 92400 Courbevoie (FR); SEKURIT SAINT GOBAIN Deutschland GmbH & Co. KG, 52066 Aachen (DE)
(72) Inventeur: Sauer, Gerd, D-5190 Stolberg (DE)
(74) Mandataire: Muller, René

(56) Documents cités:
- WO-A-88/09569
- DE-A- 3 630 519
- US-A- 4 086 595

## Description

La présente invention concerne une antenne de vitrage pour véhicules automobiles, dans laquelle, sur la surface d'un vitrage automobile ou à l'intérieur de celui-ci, est installé un conducteur d'antenne dont la base d'antenne, connectée au conducteur central d'un câble coaxial, est disposée au voisinage d'une surface conductrice prévue dans la région marginale du vitrage et connectée au conducteur extérieur du câble coaxial.

Des structures d'antenne de ce type conviennent, en particulier, comme antennes d'émission pour la radio, en particulier, comme antenne pour les communications radiotéléphoniques dans le réseau numérique. Pour que la puissance d'émission rayonne à partir de l'antenne, il faut que de telles antennes soient accordées de manière précise. A cet effet, elles ont besoin d'un plan de référence défini auquel tous les paramètres électriques sont rapportés. A titre de plan de référence, une couche conductrice de l'électricité en forme de bande est, dès lors, appliquée directement sur la région marginale du vitrage.

Une structure d'antenne de ce type est connue par le document WO 88/09569. Dans cette antenne connue, qui est prévue en tant qu'antenne radio de préférence pour le domaine des fréquences compris entre 890 et 960 MHz, le conducteur d'antenne est constitué d'un conducteur rectiligne présentant une extrémité libre qui s'étend à partir du bord du vitrage dans le champ de vision de ce vitrage. Le conducteur d'antenne et la surface conductrice servant de plan de référence peuvent être appliqués par impression et cuits, comme les conducteurs chauffants des vitrages chauffants, sur la surface du verre tournée vers l'intérieur de l'habitacle du véhicule.

En outre, dans le cas de cette structure d'antenne connue, la fréquence de résonance dépend dans une certaine mesure des matières du vitrage et des tolérances géométriques lors du montage de ce vitrage. Par conséquent, dans le cas de ces antennes connues, il est, en outre, également nécessaire de les réaccorder après le montage, si leur efficacité est en deçà d'une valeur optimale.

L'invention a pour but de réaliser une antenne de vitrage du type spécifié dans laquelle la dépendance de la fréquence de résonance à l'égard des matières utilisées ainsi que des tolérances géométriques et mécaniques du vitrage et du cadre de fenêtre de la carrosserie du véhicule soit sensiblement réduite.

Suivant l'invention, ce but est réalisé par le fait que le conducteur d'antenne a la forme d'une boucle ouverte et est connecté à son extrémité, opposée à la base d'antenne, à la surface conductrice, et par le fait ***que*** le conducteur d'antenne et la surface conductrice, sont disposés dans des plans parallèles sur le vitrage et sont constitués d'une encre à cuire conductrice de l'électricité.

Des développements et des perfectionnements avantageux de l'invention ressortiront des revendications dépendantes et de la description suivante de divers exemples de réalisation donnés avec référence aux dessins annexés, dans lesquels :
la Fig. 1 illustre une lunette artière en verre de sécurité présentant une structure d'antenne imprimée et cuite sur une surface;
la Fig. 2 est une vue à plus grande échelle d'un détail de la Fig. 1;
la Fig. 3 est une vue en élévation d'un pare-brise en verre feuilleté avec un fil d'antenne incorporé, et
la Fig. 4 est une vue en coupe suivant la ligne IV-IV de la Fig. 3.

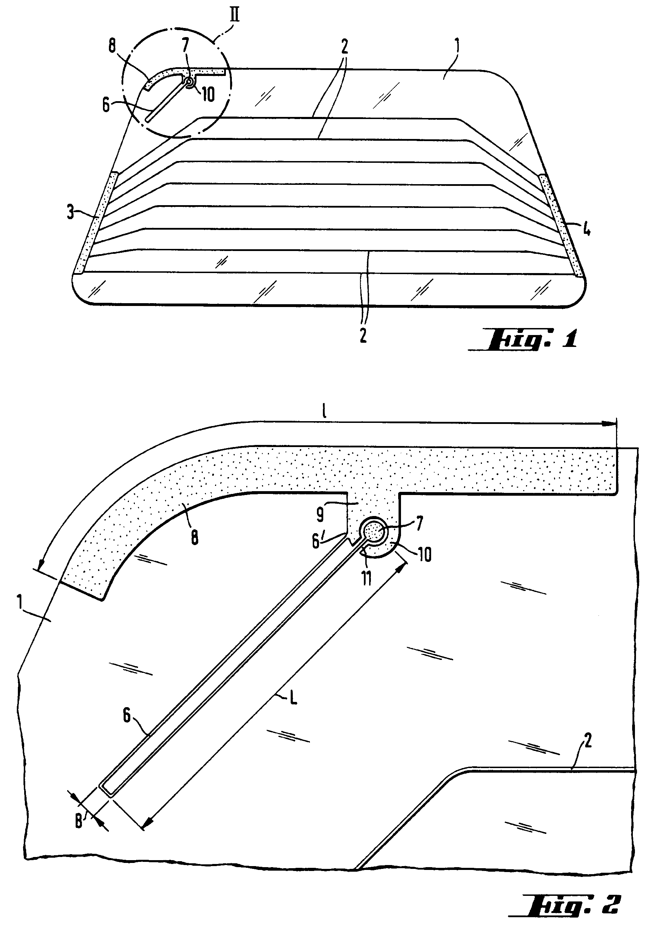

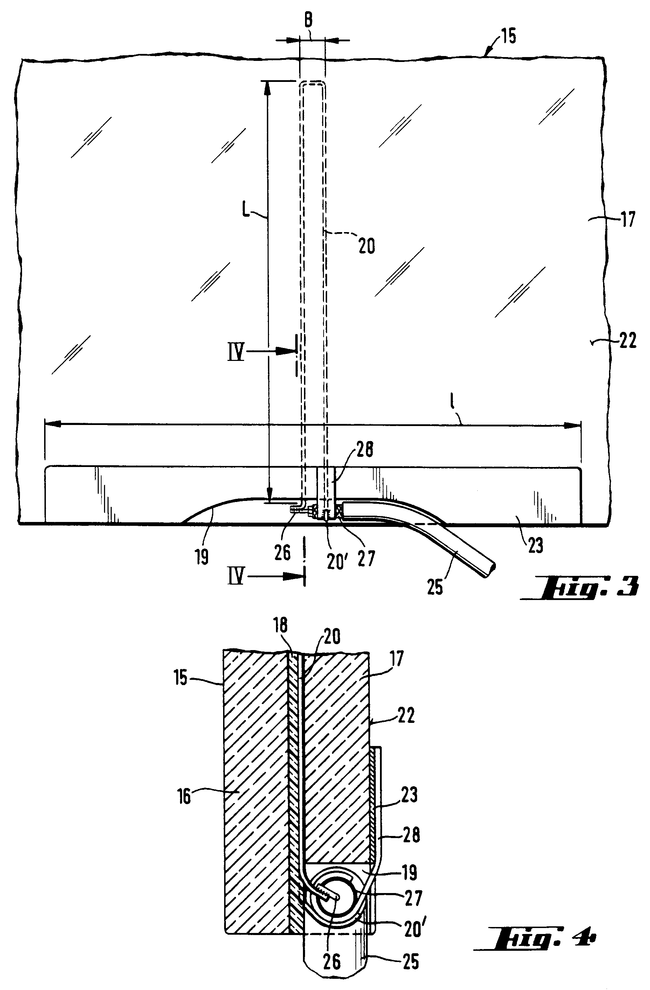

Les Fig. 1 et 2 illustrent un vitrage monolithique 1 qui a subi une trempe thermique, qui est utilisé comme lunette arrière et qui est pourvu d'un réseau de conducteurs chauffants. Le réseau de conducteurs chauffants comprend une rangée de conducteurs chauffants 2 qui s'étendent sur toute la largeur du vitrage, ainsi que deux conducteurs omnibus 3, 4 disposés latéralement aux bords du vitrage. Les conducteurs chauffants 2 et les conducteurs omnibus 3, 4 sont faits d'une encre à cuire conductrice de l'électricité, qualifiée d'argent conducteur, qui est appliquée par sérigraphie sur la surface du verre et qui est cuite dans la surface du verre au cours du processus de bombage et/ou de trempe.

Dans la région supérieure du vitrage 1, outre le réseau de conducteurs chauffants, mais sans connexion avec celui-ci est prévue une structure d'antenne convenant pour les radiocommunications à une fréquence située dans le domaine des 900 MHz. Cette structure d'antenne est faite de la même matière que les conducteurs chauffants 2 et les barres omnibus 3 et 4 et est imprimée sur la surface du verre au cours de la même opération d'impression que ceux-ci, puis cuite également à la température de bombage ou de trempe. La structure d'antenne est constituée du conducteur d'antenne 6 en forme de boucle d'environ 0,5 mm de largeur avec une base d'antenne 7 ayant la forme d'une surface élargie, à laquelle est connecté le conducteur central du câble d'amenée ayant la forme d'un câble coaxial. La longueur L de la boucle de conducteur est, par exemple, de 120 mm tandis que la largeur B de cette boucle, c'est-à-dire l'écart des deux segments de conducteur rectilignes parallèles l'un à l'autre est d'environ 10 mm. Le conducteur d'antenne en forme de boucle 6 est, dans le cas représenté, disposé dans une zone de coin supérieure du vitrage 1 et forme un angle d'environ 45° avec l'horizontale, mais il va de soi qu'il peut être installé en n'importe quel autre endroit du vitrage et être orienté essentiellement sous n'importe quel angle par rapport a l'horizontale. Lorsque les conditions le permettent, le conducteur d'antenne 6 est, de préférence, orienté à angle droit par rapport à l'horizontale.

Le contrepoids électrique au conducteur d'antenne 6 en forme d'antenne unipolaire repliée est formé par la surface conductrice 8 qui est également constituée de la même encre à cuire conductrice de l'électricité que le conducteur chauffant 2 et le conducteur d'antenne 6, et qui a également été appliquée sur la surface du verre au cours de la même étape du procédé que les autres structures conductrices. La surface conductrice 8 est formée de bandes de 1 à 3 cm de largeur le long du bord du vitrage. La longueur 1 de cette surface en forme de bande 8 n'est pas critique, mais devrait atteindre avantageusement au moins 120 mm environ. Au milieu environ, la surface conductrice 8 présente une saillie plate 9 orientée vers la surface du vitrage qui, à son extrémité, forme une surface annulaire 10. La surface annulaire 10 est pourvue d'une fente 11 orientée radialement dans laquelle est disposé le conducteur d'antenne 6 dont la base d'antenne 7 est située à l'intérieur de la surface annulaire 10 concentriquement à celle-ci. La zone d'extrémité 6' du conducteur d'antenne en forme de boucle 6 est reliée à la saillie plate 9 de la surface conductrice 8.

Le réseau de conducteurs chauffants et la structure de conducteur d'antenne se trouvent sur la face du vitrage tournée vers l'intérieur de l'habitacle. Lorsque le vitrage est monté dans le cadre de fenêtre de la carrosserie automobile par la technique de collage qui est courante actuellement, la surface conductrice 8 est reliée sur une zone étendue au cordon d'adhésif et, par l'intermédiaire du cordon d'adhésif, à la bride de fixation métallique de la carrosserie automobile. Etant donné que les matières adhésives courantes actuellement présentent une certaine conductivité électrique, la surface conductrice 8 est de cette manière connectée électriquement à la carrosserie. De la sorte, l'antenne est reliée directement à la carrosserie.

Sur les Fig. 3 et 4, un vitrage en verre feuilleté 15 est représenté avec une antenne en fil métallique conçue conformément à l'invention. Le vitrage en verre feuilleté 15 est constitué de la feuille de verre individuelle 16 tournée vers l'extérieur, dans l'état monté, de la feuille de verre individuelle 17 tournée vers l'intérieur de l'habitacle et de la couche intermédiaire thermoplastique 18 reliant les deux feuilles de verre individuelles 16 et 17 l'une à l'autre. La feuille de verre individuelle intérieure 17 est pourvue, à son bord inférieur, d'une échancrure 19. Dans la couche intermédiaire thermoplastique 18 se trouve un fil métallique 20 en forme de boucle, c'est-à-dire en forme d'antenne unipolaire repliée dont les deux extrémités ressortent dans la zone de l'échancrure marginale 19. La longueur L de la boucle de fil 20 est à nouveau fonction de la fréquence d'émission et atteint, par exemple, à nouveau 120 mm tandis que la largeur B de la boucle de fil 20 est à nouveau d'environ 10 mm.

Le long du bord inférieur du vitrage, sur la surface libre 22 du verre feuilleté, est disposée une surface conductrice de l'électricité en forme de bande 23. Dans le cas présent, il peut s'agir, par exemple, d'une couche d'une encre ou d'une encre à cuire toutes deux conductrices de l'électricité. La surface 23 conductrice de l'électricité est cependant faite avantageusement d'une feuille de clinquant qui est collée solidement et à demeure à la surface 23 du verre. Les dimensions superficielles de la surface conductrice de l'électricité 23 ne sont à nouveau pas critiques, mais la longueur de la feuille de clinquant devrait être d'au moins 120 mm environ.

Dans le cas de l'exemple de réalisation représenté, l'antenne est, certes, installée au bord inférieur du vitrage, mais elle peut, manifestement, être installée en n'importe quel autre endroit du vitrage en verre feuilleté. Il s'est avéré que des résultats particulièrement bons peuvent être obtenus lorsque l'antenne est installée dans la zone marginale supérieure du vitrage en verre feuilleté.

A l'intérieur de l'échancrure marginale 19 est disposée l'extrémité d'un câble d'amenée d'antenne 25 ayant la forme d'un câble coaxial. La première extrémité de la boucle de conducteur 20, c'est-à-dire la base de l'antenne, est connectée au conducteur central 26 du câble coaxial et l'autre extrémité 20' est connectée au conducteur extérieur 27 du câble coaxial 25 et à la surface conductrice 23. Pour établir la connexion électrique du conducteur extérieur 27 avec la feuille de clinquant 23, une bande de clinquant 28 est connectée par brasage d'une part à la feuille de clinquant 23 et d'autre part au conducteur extérieur 27 du câble coaxial 25. L'échancrure marginale 19 est ensuite remplie d'un polymère durcissant adéquat et est scellée pour protéger l'endroit de la connexion et fixer le câble coaxial 25 au vitrage.

Dans l'état monté du vitrage feuilleté, la surface conductrice de l'électricité 23 est, à nouveau, connectée sur une grande étendue, d'une manière conductrice de l'électricité, par l'intermédiaire du cordon d'adhésif au cadre métallique de la carrosserie, de sorte que l'antenne reçoit un potentiel de référence bien défini.

## Revendications

1. Antenne de vitrage pour véhicules automobiles, dans laquelle, sur la surface d'un vitrage automobile (1) ou à l'intérieur de celui-ci est installé un conducteur d'antenne (6, 20) dont la base d'antenne (7), connectée au conducteur central (26) d'un câble coaxial, est disposée au voisinage d'une surface conductrice (8) prévue dans la région marginale du vitrage (1) et connectée au conducteur extérieur (27) du câble coaxial, le conducteur d'antenne (6, 20) ayant la forme d'une boucle ouverte et étant connecté à son extrémité (6', 20'), opposée à la base d'antenne (7), à la surface conductrice (8, 23), ***caractérisée en ce que*** le conducteur d'antenne (6, 20) et la surface conductrice (8, 23) sont disposés dans des plans parallèles sur le vitrage (1) et le conducteur d'antenne (6, 20) et la surface conductrice (8, 23) ou le conducteur d'antenne seulement (6, 20) sont constitués d'une encre à cuire conductrice de l'électricité.

2. Antenne de vitrage suivant la revendication 1, ***caractérisée en ce que*** la base (7) du conducteur d'antenne (6) est disposée à l'intérieur d'un segment superficiel annulaire (10) de la surface conductrice (8) et le conducteur d'antenne (6) connecté à la base d'antenne (7) sort du segment superficiel annulaire (10) à travers une fente (11).

3. Antenne de vitrage suivant la revendication 1, ***caractérisée en ce que*** dans le cas d'un vitrage en verre feuilleté (15), le conducteur d'antenne a la forme d'une boucle de fil métallique (20) disposée dans la couche intermédiaire thermoplastique (18), et la surface conductrice (23) est disposée dans la zone marginale du vitrage en verre feuilleté sur la surface libre (22) tournée vers l'intérieur de l'habitacle.

4. Antenne de vitrage suivant la revendication 3, ***caractérisée en ce que*** la surface conductrice (23) est faite d'une feuille de clinquant collée à la surface (22) du vitrage.

5. Antenne de vitrage suivant la revendication 3 ou 4, ***caractérisée en ce qu'***à l'antenne est connecté un câble d'amenée d'antenne (25) ayant la forme d'un câble coaxial, le conducteur central (26) du câble coaxial étant connecté à la première extrémité du conducteur d'antenne (20) et le conducteur extérieur (27) du câble coaxial étant conecté d'une part à l'autre extrémité (20') du conducteur d'antenne (20) et d'autre part, par l'intermédiaire d'une bande de clinquant (28), à la surface conductrice (23).

6. Antenne de vitrage suivant l'une quelconque des revendications 1 à 5, ***caractérisée en ce que*** dans l'état monté, la surface conductrice (8, 23) est reliée par l'intermédiaire d'une couche d'adhésif fixant le vitrage dans la baie de fenêtre, sur une zone étendue, au cadre de fenêtre métallique de la carrosserie du véhicule.

## Claims

1. Glazing antenna for cars, in which on the surface of a car glazing (1) or within the latter is installed an antenna conductor (6, 20), whose antenna base (7), connected to the central conductor (26) of a coaxial cable, is placed in the vicinity of a conductive surface (8) provided in the marginal region of the glazing (1) and connected to the external conductor (27) of the coaxial cable, the antenna conductor (6, 20) being in the form of an open loop and being connected at its end (6', 20'), opposite to the antenna base (7), to the conductive surface (8, 23), characterized in that the antenna conductor (6, 20) and the conductive surface (8, 23) are placed in parallel planes on the glazing (1) and the antenna conductor (6, 20) and the conductive surface (8, 23) or solely the antenna conductor (6, 20) are formed from an electricity-conducting, baking ink.

2. Glazing antenna according to claim 1, characterized in that the base (7) of the antenna conductor (6) is located within an annular surface segment (10) of the conductive surface (8) and the antenna conductor (6) connected to the antenna base (7) passes out of the annular surface segment (10) through a slot (11).

3. Glazing antenna according to claim 1, characterized in that in the case of a laminated glass glazing (15), the antenna conductor is in the form of a metal wire loop (20) placed in the intermediate thermoplastic layer (18), and the conductive surface (23) is located in the marginal area of the laminated glass glazing on the free surface (22) turned towards the inside of the vehicle interior.

4. Glazing antenna according to claim 3, characterized in that the conductive surface (23) is formed by a foil sheet bonded to the glazing surface (22).

5. Glazing antenna according to claim 3 or 4, characterized in that to the antenna is connected an antenna feed cable (25) in the form of a coaxial cable, the central conductor (26) of the coaxial cable being connected to the first end of the antenna conductor (20) and the outer conductor (27) of the coaxial cable is connected on the one hand to the other end (20') of the antenna conductor (20) and on the other, by means of a foil strip (28), to the conductive surface (23).

6. Glazing antenna according to any one of the claims 1 to 5, characterized in that in the fitted state, the conductive surface (8, 23) is connected by means of an adhesive film fixing the glazing in the window opening, over an extensive area, to the metal window frame of the vehicle body.

## Patentansprüche

1. Scheibenantenne für Kraftfahrzeuge, bei der auf der Oberfläche oder innerhalb einer Autoglasscheibe (1, 15) ein Antennenleiter (6, 20) angeordnet ist, dessen mit dem Mittelleiter (26) eines Koaxialkabels (25) verbundener Antennenfußpunkt (7) in der Nähe einer im Randbereich der Glasscheibe angeordneten und mit dem äußeren Leiter (27) des Koaxialkabels verbundenen leitfähigen Fläche (8) angeordnet ist, wobei der Antennenleiter (6, 20) die Form einer offenen Schleife aufweist und der an seinem dem Antennenfußpunkt (7) entgegengesetzten Ende (6';20') mit der leitfähigen Fläche (8;23) verbunden ist,
**dadurch gekennzeichnet**, der Antennenleiter (6, 20) und die leitfähige Fläche (8, 23) in parallelen Ebenen auf der Glasscheibe (1) angeordnet sind und daß der Antennenleiter (6, 20) und die leitfähige Fläche (8, 23) oder nur der Antennenleiter (6, 20) aus einer elektrisch leitfähigen Einbrennfarbe bestehen.

2. Scheibenantenne nach Anspruch 1, **dadurch gekennzeichnet**, daß der Fußpunkt (7) des Antennenleiters (6) innerhalb eines kreisringförmigen Flächenabschnittes (10) der leitfähigen Fläche (8) angeordnet, und der mit dem Fußpunkt (7) verbundene Antennenleiter (6) durch einen Schlitz (11) aus dem kreisringförmigen Flächenabschnitt (10) herausgeführt ist.

3. Scheibenantenne nach Anspruch 1, **dadurch gekennzeichnet**, daß im Falle einer Verbundglasscheibe (15) der Antennenleiter in Form einer Metalldrahtschleife (20) in der thermoplastischen Zwischenschicht (18) angeordnet ist und daß die leitfähige Fläche (23) im Randbereich der Verbundglasscheibe auf der freien, dem Fahrzeuginnenraum zugewandten Oberfläche (22) angeordnet ist.

4. Scheibenantenne nach Anspruch 3, **dadurch gekennzeichnet**, daß die leitfähige Schicht (23) aus einem auf die Oberfläche (22) der Glasscheibe geklebten Metallfolie besteht.

5. Scheibenantenne nach Anspruch 3 oder 4, **dadurch gekennzeichnet**, daß an die Antenne ein Antennenanschlußkabel (25) in Form eines Koaxialkabels angeschlossen ist, wobei der Mittelleiter (26) des Koaxialkabels mit dem ersten Ende des Antennenleiters (20) und der äußere Leiter (27) des Koaxialkabels einerseits mit dem anderen Ende (20') des Antennenleiters (20), und andererseits mittels eines Metallfolienstreifens (28) mit der leitfähigen Schicht (23) verbunden ist.

6. Scheibenantenne nach einem der Ansprüche 1 bis 5, **dadurch gekennzeichnet**, daß im eingebauten Zustand die leitfähige Fläche (8;23) über eine die Glasscheibe in der Fensteröffnung befestigende Kleberschicht großflächig mit dem metallischen Fensterrahmen der Fahrzeugkarosserie verbunden ist.
